# EUROPEAN PATENT APPLICATION

(11) **EP 1 496 433 A2**
(43) Date of publication of application: **12.01.2005**
(21) Application number: 04014099.8
(22) Date of filing: 16.06.2004
(51) Int. Cl.: G06F 9/445

(54) **Program and computer capable of easily updating, setting, or testing control program**

(30) Priority: 17.06.2003 JP 2003171969
(71) Applicant: ALPS ELECTRIC CO., LTD., Tokyo 145-8501 (JP)
(72) Inventor: Daisuke, Inokuchi, Ota-ku Tokyo 145-8501 (JP)
(74) Representative: Klunker . Schmitt-Nilson . Hirsch

(57) **Abstract**

The present invention provides a program and a computer capable of easily updating, setting up, or testing a control program stored in a storage unit of a peripheral device connected to the computer. In order to update, test, or set up a control program stored in a storage unit 2a of a peripheral device 2 using a computer 1, the program allows the computer 1 to execute a step S1 of changing a first identification information stored in the storage unit 2a of the peripheral device 2 to a second identification information; a step S2 of re-recognizing the peripheral device 2; and a step S4 of updating, testing, or setting up the control program.

## Description

### BACKGROUND OF THE INVENTION

### 1. Field of The Invention

The present invention relates to a program for changing a driver software that controls a peripheral device connected to the computer, and to a computer that employs such a program.

### 2. Description of The Related Art

To connect peripheral devices to a computer and utilize them, a program is required to provide an operation system (OS) with necessary information for operating the peripheral devices and to manage the operation of the peripheral devices. Such a program for the computer is referred to as a driver software (hereinafter, simply referred to as a 'driver'). There is a plurality of drivers in correspondence with the usage and purpose of the respective peripheral devices.

The peripheral devices include, for example, an input/output device and a storage unit that are operated under the control of a central processing unit (CPU). In more detail, the peripheral devices include a keyboard, a mouse, a joystick, a scanner, a display, a printer, a modem, a Bluetooth module, a memory, a CD-ROM/R/RW drive, a hard disk drive, a magneto-optical (MO) drive, a digital video camera, and a digital camera.

A method of connecting the peripheral devices to the computer may include a direct connection method in which an expansion board is directly connected to an expansion slot of the computer, a wired connection method in which RS-232C, an universal serial bus (USB), or a small computer system interface (SCSI) is used, and a wireless connection method in which Bluetooth or IrDA is used.

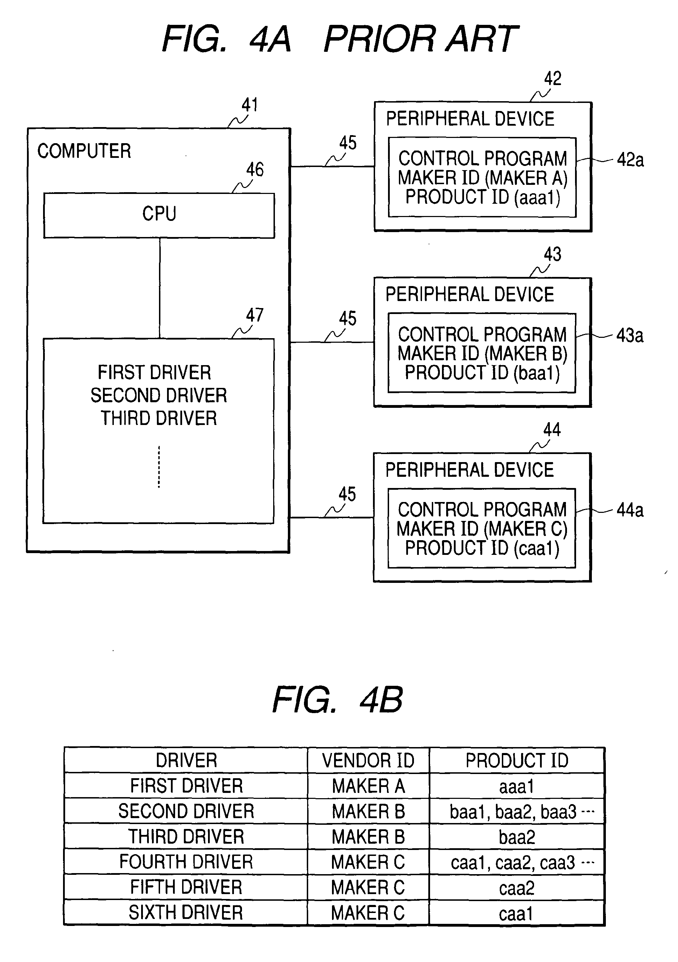

FIG. 4A is a block diagram of a conventional computer 41 and peripheral devices 42 to 44. Referring to FIG. 4A, the peripheral devices 42 to 44 are connected to the computer 41 through connecting means 45. The computer 41 includes a CPU 46 and a storage unit 47. Drivers 1, 2, 3 ··· are installed in the storage unit 47. The respective drivers are provided to correspond to the respective peripheral devices 42 to 44. However, in order to allow the CPU 46 to recognize the correspondence of the drivers and the peripheral devices 42 to 44, vendor IDs and product IDs on applicable peripheral devices are stored in information files of the drivers 42 to 44. FIG. 4B is a table illustrating the correspondence of each driver and the vendor ID and product ID stored in the information file thereof.

The respective peripheral devices 42 to 44 have a non-volatile memory, such as an electrically erasable programmable read-only memory (EEPROM) or a flash memory, as the storage units 42a to 44a. A Program (hereinafter, referred to as a 'control program') for controlling the respective peripheral devices 42 to 44 is stored in the respective storage units 42a to 44a of the peripheral devices. In addition, the storage units 42a to 44 of the peripheral devices each contain an identification number for specifying the vendor of each peripheral device 42 to 44 (hereinafter, referred to as a 'vendor ID') and an identification number for specifying a type and a specification of each peripheral device 42 to 44 (hereafter, referred to as a 'product ID').

When the peripheral devices 42 to 44 are connected to the computer 41, the CPU 46 reads out the vendor ID and the product ID from the respective storage units 42a to 44a of the peripheral devices 42 to 44. Then, the CPU 46 compares the vendor ID and product ID read out from the respective peripheral devices 42 to 44 with those in the information file of each driver stored in a storage unit 47 of the computer 41. As a result of comparison, a driver in the storage unit 47 of which the vendor ID and product ID correspond to those of a peripheral device is executed as a driver for the peripheral device.

If the vendor ID and product ID corresponding to those of the peripheral device 42 do not exist in the driver information files of the storage unit 47 of the computer 41, a driver that exists as a compressed file in the storage unit 47 is uncompressed and installed, or a driver is installed from an external storage medium.

Referring back to FIG. 4, the vendor ID of the peripheral device 42 is a maker A, and the product ID thereof is aaa1. Therefore, a first driver is executed. In addition, the vendor ID of the peripheral device 43 is a maker B, and the product ID thereof is baa1. Therefore, a second driver is executed. Further, the vendor ID of the peripheral device 44 is a maker C, and the product ID thereof is caa1. Therefore, the vendor ID and the product ID of the peripheral device 44 correspond to those of a fourth driver and a sixth driver. As such, when the vendor ID and product ID read out from any peripheral device correspond to those of a plurality of drivers, the CPU 46 determines and executes an optimal driver, or a user manually selects and executes a driver.

However, in order to update the control program stored in the respective storage units 42a to 44a of the peripheral devices 42 to 44, the storage units 42a to 44a was exchanged or was separated from the peripheral devices 42 to 44 to re-write the control programs therein. However, recently, a method of updating the control programs with the storage units 42a to 44a still mounted in the peripheral devices 42 to 44 has been devised.

When the control programs are updated with the storage units 42a to 44a still mounted in the peripheral devices 42 to 44, the peripheral devices 42 to 44 are connected to the computer 41, and programs transferred from the computer 41 are stored in the storage units 42a to 44a of the peripheral devices 42 to 44, thereby updating the control programs (see Japanese Unexamined Patent Application Publication No. 2001-117778).

Such a process of updating the control program is different from general processes on the peripheral devices 42 to 44 and is not performed in drivers (hereinafter, referred to as 'general drivers') that manage general usage of the peripheral devices 42 to 44. In addition, the general drivers cannot test or set up the control programs of the peripheral devices 42 to 44. That is, special drivers are required for updating, setting up, or testing the control programs of the peripheral devices 42 to 44 (hereinafter, referred to as 'special drivers').

Therefore, when the control program of the peripheral device is updated, set up, or tested, first, the driver of the computer 41 is changed from the general driver to the special driver, and then the control program of the peripheral device is updated, set up, or tested. Finally, the special driver is reverted back to the general driver.

In order to allow the CPU 46 to recognize the correspondence between the special driver and a peripheral device, the special driver also contains the vendor IDs and product IDs of applicable peripheral devices in its information file. However, since the vendor IDs and the product IDs of the peripheral devices are fixed, the vendor IDs and the product IDs stored in the information file of the special driver are the same as those of the general drivers that are applied to the same peripheral devices.

As described above, if the read vendor ID and product ID correspond to more than one of the drivers, the CPU determines and executes an optimal driver, or the user manually selects and executes a driver. In general, since the general driver is selected as the optimal driver, the user needs to manually change the driver from the general driver to the special driver. After changing to the special driver, the CPU 46 recognizes the special driver as a standard with respect to the peripheral device. In addition, the user manually performs a change from the special driver to the general driver.

However, it is burdensome for the user who has no specialized knowledge to change the driver. In addition, the user may inadvertently delete a necessary driver.

### SUMMARY OF THE INVENTION

The present invention is designed to solve the above problems, and an object of the present invention is to provide a program and a computer capable of easily updating, setting up, or testing a control program which is stored in a storage unit of a peripheral device connected to the computer.

To achieve the above object, a program according to the present invention allows a computer that has a function of executing a driver software corresponding to identification information stored in a storage unit of a peripheral device connected thereto to execute: in order to update, test, or set up a control program stored in the storage unit of the peripheral device, a step of changing a first identification information stored in the storage unit of the peripheral device to a second identification information; a step of re-recognizing the peripheral device; and a step of updating, testing, or setting up the control program.

According to such a program, first, the computer executes the driver corresponding to the first identification information as the driver of the peripheral device. However, the computer changes the identification information stored in the storage unit of the peripheral device from the first identification information to the second identification information so as to correspond to a driver for updating, testing, or setting up the control program stored in the storage unit of the peripheral device, and then re-recognizes the peripheral device. Therefore, it is possible to execute the driver corresponding to the second identification information as the driver of the peripheral device and to update, test, or set up the control program that is stored in the storage unit of the peripheral device using the driver. Thus, the computer automatically processes a change of the driver that has been manually performed by the user in the conventional art.

After allowing the computer to execute the step of updating, testing, or setting up the control program, the program may allow the computer to execute a step of changing the second identification information to a third identification information, and a step of re-recognizing the peripheral device.

According to such a program, the computer automatically changes the special driver to another driver after the step of updating, testing, or setting up the control program stored in the storage unit of the peripheral device. Therefore, a user need not manually change the driver, and the control program of the peripheral device can be easily updated, tested, or set up.

In addition, the third identification information may be the same as the first identification information.

As configured above, the same driver can be used as the general driver before and after updating, testing, or setting up the control program of the peripheral device, and thus a change in computer environment is not made.

Further, a computer according to the present invention comprises a function of executing a driver software corresponding to identification information stored in a storage unit of a peripheral device connected to the computer; a function of changing the identification information stored in the storage unit of the peripheral device from a first identification information to a second identification information; a function of re-recognizing the peripheral device; and a function of updating, testing, or setting up a control program stored in the storage unit of the peripheral device by a second driver software corresponding to the second identification information.

According to such a computer, the control program of the peripheral device that has executed the driver corresponding to the first identification information can be automatically updated, tested, or set up by the driver corresponding to the second identification information. Therefore, since the computer automatically executes a change of the driver that was manually made by the user in the conventional art, the control program of the peripheral device can be easily updated, tested, or set up.

Furthermore, the computer according to the present invention may further include a function of changing the identification information stored in the storage unit of the peripheral device from the second identification information to a third identification information which does not correspond to the second driver software.

The computer having such functions automatically changes the special driver to another driver after the step of updating, testing, or setting up the control program stored in the storage unit of the peripheral device. Therefore, the user need not manually change the driver, and the control program of the peripheral device can be easily updated, tested, or set up.

In addition, the third identification information may be the same as the first identification information.

In this way, before and after updating, testing, or setting up the control program of the peripheral device, the same driver can be used as the general driver, and a change in computer environment is not made.

### BRIEF DESCRIPTION OF THE DRAWING FIGURES

These and/or other aspects and advantages of the invention will become apparent and more readily appreciated from the following description of the embodiments, taken in conjunction with the accompanying drawing figures of which:
FIGS. 1A and 1B are block diagrams illustrating a computer and a peripheral device;
FIG. 1C is a table showing the correspondence between drivers, and vendor IDs and product IDs stored in information files of the drivers;
FIG. 2 is a flowchart illustrating a program routine according to an embodiment of the present invention;
FIG. 3 is a flowchart illustrating a program routine in steps S3 and S7 of FIG. 2;
FIG. 4A is a block diagram illustrating a conventional computer and peripheral devices; and
FIG. 4B is a table showing the correspondence between drivers, and vendor IDs and product IDs stored in information files of the drivers.

### DETAILED DESCRIPTION OF THE EMBODIMENTS

Embodiments of the present invention will now be illustrated with reference to the accompanying drawings.

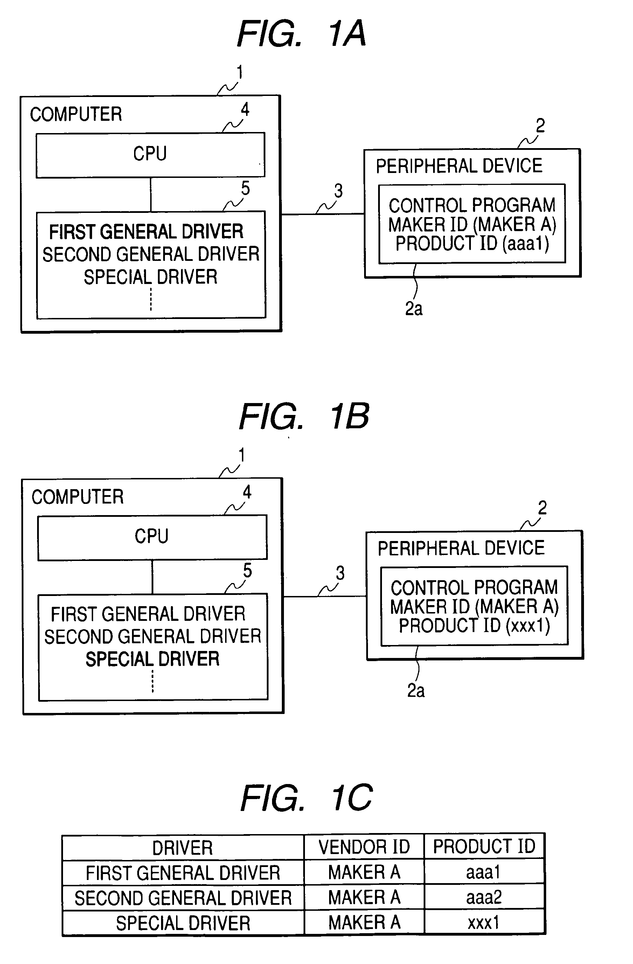

FIGS. 1A and 1B are block diagrams illustrating a computer 1 and a peripheral device 2. FIG. 1C is a table showing the correspondence between drivers, and vendor IDs and product IDs stored in information files of the drivers.

As shown in FIGS. 1A and 1B, the computer 1 and the peripheral device 2 are connected to each other through connecting means 3.

The computer 1 includes a central processing unit (CPU) 4 and a storage unit 5. The CPU 4 is an integration of a basic processing unit, a control unit, and data channels. Recently, a microprocessor in which the above components are mounted on a large scale integrated circuit (LSI) is used as the CPU 4. The storage unit 5 contains programs and data required for operation and control, and a random access memory (RAM) or a hard disk is used as the storage unit 5. The storage unit 5 contains various drivers. The computer 1 may be a one-chip microcomputer in which the CPU 4 and the storage unit 5 are mounted on one LSI.

According to the present invention, the identification information stored in an information file of a general driver applied to the peripheral device 2 needs to be different from that of a special driver. The identification information stored in the information file may be a combination of a vendor ID and a product ID as in the conventional art, or may be other identification symbols (for example, identification symbols that are set according to computer makers).

According to the present embodiment, the storage unit 5 of the computer 1 contains a first general driver, a second general driver, and a special driver that correspond to the peripheral device 2. Of the identification information items stored in the information files of the drivers, product IDs are different from each other. Therefore, the combinations of the product IDs and other identification information items are also different from each other (see FIG. 1C).

The peripheral device 2 includes a non-volatile memory, such as an electrically erasable programmable read-only memory (EEPROM) or a flash memory, as a storage unit 2a. The peripheral device 2 may be an input/output device or a storage unit that is operated under the control of the CPU 4 of the computer 1. In more detail, the peripheral device 2 may be a keyboard, a mouse, a joystick, a scanner, a display, a printer, a modem, a Bluetooth module, a memory, a CD-ROM/R/RW drive, a hard disk drive, a magneto-optical (MO) drive, a digital video camera, or a digital camera.

The connecting means 3 may connect the computer 1 to the peripheral device 2 using various connection method, such as a direct connection method in which an expansion board is directly connected to an expansion slot of the computer 1, a wired connection method using RS-232C, a universal serial bus (USB), or a small computer system interface (SCSI), or a wireless connection method using Bluetooth or IrDA.

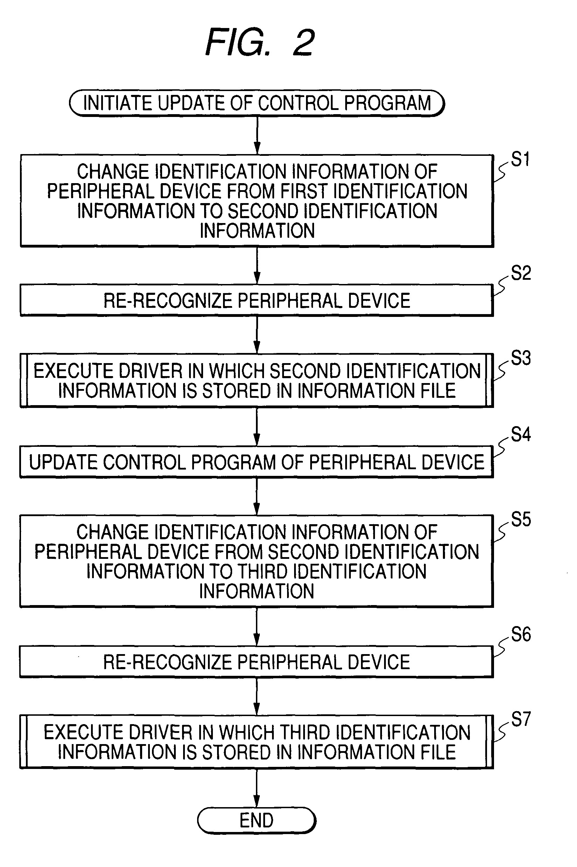

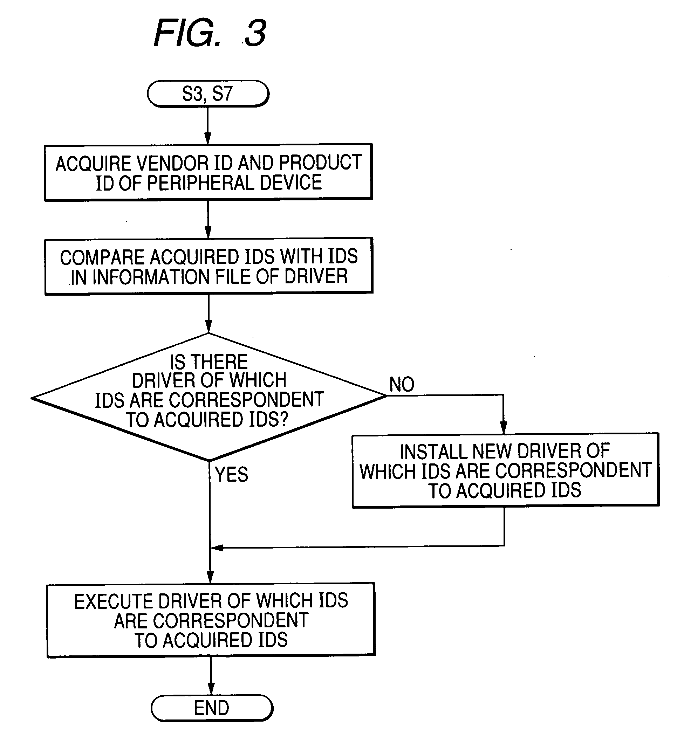

In the computer 1 and peripheral device 2 having the above construction, a process of updating a control program stored in the storage unit 2a of the peripheral device 2 using the computer 1 will be described with reference to FIGS. 2 and 3.

In an initial state as shown in FIG. 1A, the maker A as the vendor ID and aaa1 as the product ID are stored in the storage unit 2a of the peripheral device 2. The CPU 4 of the computer 1 executes the first general driver (in bold in FIG. 1A) of the storage unit 5 for the peripheral device 2.

When the program for updating the control program is executed, a process of updating the identification information (the combination of the vendor ID and the product ID) stored in the storage unit 2a of the peripheral device 2 from a first identification information to a second identification information is first executed (step S1 in FIG. 2). The second identification information is stored in the information file of the special driver for updating the control program of the peripheral device 2. In addition, the second identification information is different from the identification information stored in the information file of the general driver. However, if the second identification information is different from the identification information stored in the information file of any other driver of the computer, there is no competing driver. According to an embodiment of the present invention, the product ID stored in the storage unit 2a of the peripheral device 2 is changed from aaa1 to xxx1.

In the storage unit 2a of the peripheral device 2, the identification information, such as the vendor ID and the product ID, is stored in a register region which is variably set up, and the identification information can be changed according to commands from the CPU 4 of the computer 1.

Next, the CPU 4 re-recognizes the peripheral device 2 of which identification information is changed (step S2 in FIG. 2). The re-recognition of the peripheral device 2 by the CPU 4 is performed by restarting or rebooting the computer 1. Since the peripheral device 2, which was previously assigned as the first identification information, is currently assigned as the second identification information, the CPU 4 recognizes that a new peripheral device 2 is connected.

Therefore, the CPU 4 executes a driver applied to the new peripheral device 2 (step S3 in FIG. 2). A flowchart for such a process is illustrated in FIG. 3. As shown in Fig. 3, the CPU 4 acquires a vendor ID (maker A) and a product ID (xxx1), which are the second identification information, from the storage unit 2a of the peripheral device 2. The acquired vendor ID (maker A) and product ID (xxx1) are compared with those in the driver information file stored in the storage unit 5 of the computer 1. As a result of comparison, if there is a correspondent driver, the correspondent driver is executed. If not, a new driver of which identification information corresponds to the identification information of the peripheral device 2 is installed and executed by uncompressing a compressed file, receiving from an external recording medium, or downloading from another server over a telecommunication circuit network.

According to the present embodiment, as shown in FIG. 1B, the special driver (in bold in FIG. 1B) is executed since the vendor ID (maker A) and the product ID (xxx1) stored in the information file of the special driver are correspondent to those of the peripheral device 2.

Consequently, the CPU 4 can update the control program stored in the storage unit 2a of the peripheral device 2 by the special driver (step S4 in FIG. 2).

Since the peripheral device 2 cannot be used for a general purpose, the special driver is applied after the control program of the peripheral device 2 is updated. The identification information (the combination of the vendor ID and the product ID in the case of the present embodiment) stored in the storage unit 2a of the peripheral device 2 is changed from the second identification information to a third identification information that corresponds to the general driver (step S5 in FIG. 2).

The third identification information corresponds to the identification information stored in the information file of the general driver. The third identification information may be the same as the first identification information such that the same general driver as the initial general driver is executed, or may be different from the first identification information such that a general driver different from the initial general driver is executed. According to the present invention, the product ID stored in the storage unit 2a of the peripheral device 2 is changed from xxx1 to aaa2 such that the general driver different from the initial general driver is executed.

The CPU 4 recognizes the peripheral device 2 of which identification information is changed (step S6 in FIG. 2), and executes the second general driver to be applied to the new peripheral device 2 (step S7 in FIG. 2).

A description is made on the process of updating the control program. However, the process of setting up or testing the control program can be also preformed in the same flow.

According to the aforementioned embodiment, the first general driver is changed to the special driver capable of updating the control program, and the special driver is further changed to the second general driver. However, the updated control program of the peripheral device can be set up or tested by adapting the special driver capable of setting up or testing the control program as the driver corresponding to the third identification information.

### [EMBODIMENT]

According to the present embodiment, the present invention is used for a process of updating a control program of a Bluetooth module.

A Bluetooth module (hereinafter, referred to as a module manufactured by Cambridge Silicon Radio PLC (CSR PLC), United Kingdom) in which an integrated circuit (IC) chip manufactured by CSR PLC is mounted includes a flash memory as a storage unit. The flash memory contains a control program and the identification information of the module manufactured by CSR PLC.

In general, the module manufacture by CSR PLC is used by a driver for a Bluetooth module manufactured by Open Interface Inc. (hereinafter, referred to as a driver manufactured by OI Inc.). The update, setup, or test of the control program of the module manufactured by CSR PLC requires a driver for the Bluetooth module manufactured by CRS PLC (hereinafter, referred to as a driver manufactured by CSR PLC).

An embodiment of the present invention utilizes the driver manufactured by OI Inc. of which information file contains only the identification information of the module manufactured by CSR PLC, and the driver manufactured by CSR PLC of which information file contains only the update identification information other than the identification information of the module manufactured by CSR PLC.

Accordingly, when the module manufactured by CSR PLC is connected to the computer, the computer acquires the identification information of the module manufactured by CSR PLC, and the driver manufactured by OI Inc. of which information file contains the same identification information is executed.

When DFU (Device Firmware Upgrade).EXE is executed to update the control program of the module manufactured by CSR PLC, the CPU of the computer changes the identification information stored in the flash memory of the module manufactured by CSR PLC to the update identification information (the identification information other than the identification information of the module manufactured by CSR PLC) stored in the information file of the driver manufactured by CSR PLC.

Next, when the computer is reset, the CPU of the computer recognizes the module manufactured by CSR PLC and acquires the update identification information of the changed module manufactured by CSR PLC. Then, the driver manufactured by CSR PLC of which information file contains the same identification information is executed.

Therefore, since the driver manufactured by CSR PLC is applied to the module manufactured by CSR PLC, the control program of the module manufactured by CSR PLC may be updated.

After updating the control program of the module manufactured by CSR PLC, the CPU of the computer changes the identification information stored in the flash memory of the module manufactured by CSR PLC from the update identification information to the identification information of the module manufactured by CSR PLC.

Finally, when the computer is reset, the CPU of the computer re-recognizes the module manufactured by CSR PLC and acquires the identification information of the module manufactured by CSR PLC. Then, the driver manufactured by OI Inc. of which information file contains the same identification information is executed.

As described above, according to the program of the present invention, the computer automatically processes a change of the drive that has been manually performed by the user. Therefore, the control program of the peripheral device is easily updated, tested, or set up.

When the program allows the computer to execute the step of changing the second identification information to the third identification information and the step of re-recognizing the peripheral device after allowing the computer to execute a step of updating, testing, or setting up the control program, a change from the special driver to another driver is automatically made. Therefore, it is not necessary for a user to manually change the driver, and the control program of the peripheral device can be effectively updated, tested, or set up.

In addition, when the computer according to the present invention is used, the control program of the peripheral device that has executed the driver corresponding to the first identification information can be automatically updated, tested, or set up by the driver corresponding to the second identification information. That is, the computer automatically processes a change of the driver that has been manually made by the user in the conventional art. Therefore, the control program of the peripheral device can be effectively updated, tested, or set up.

If the computer has a function of changing the identification information stored in the storage unit of the peripheral device from the second identification information to the third identification information which does not correspond to the second driver software, the computer updates, tests, or sets up the control program stored in the storage unit of the peripheral device and then automatically changes the special driver to another driver. Therefore, the user need not manually change the driver, and the control program of the peripheral device can be effectively updated, tested, or set up.

Further, if the third identification information is the same as the first identification information, the same driver can be used as the general driver before and after the update, test, or setup of the control program of the peripheral device. Therefore, a change in the computer environment is not made.

While the embodiments of the present invention have been described, additional variations and modifications of the embodiments may occur to those skilled in the art once they learn of the basic inventive concepts. Therefore, it is intended that the appended claims shall be construed to include both the above embodiments and all such variations and modifications that fall within the spirit and scope of the invention.

## Claims

1. A program for allowing a computer that has a function of executing a driver software corresponding to identification information stored in a storage unit of a peripheral device connected thereto to execute:
in order to update, test, or set up a control program stored in the storage unit of the peripheral device,
a step of changing a first identification information stored in the storage unit of the peripheral device to a second identification information;
a step of re-recognizing the peripheral device; and
a step of updating, testing, or setting up the control program.

2. The program according to claim 1,
wherein, after allowing the computer to execute the step of updating, testing, or setting up the control program, the program further allows the computer to execute a step of changing the second identification information to a third identification information; and a step of re-recognizing the peripheral device.

3. The program according to claim 2,
wherein the third identification information is the same as the first identification information.

4. A computer comprising:
a function of executing a driver software corresponding to identification information stored in a storage unit of a peripheral device connected to the computer;
a function of changing the identification information stored in the storage unit of the peripheral device from a first identification information to a second identification information;
a function of re-recognizing the peripheral device; and
a function of updating, testing, or setting up a control program stored in the storage unit of the peripheral device by a second driver software corresponding to the second identification information.

5. The computer according to claim 4, further comprising a function of changing the identification information stored in the storage unit of the peripheral device from the second identification information to a third identification information which does not correspond to the second driver software.

6. The computer according to claim 5,
wherein the third identification information is the same as the first identification information.
